# EUROPEAN PATENT SPECIFICATION

(11) **EP 1 945 055 B1**
(45) Date of publication and mention of the grant of the patent: **11.02.2009**
(21) Application number: 06779432.1
(22) Date of filing: 14.09.2006
(51) Int. Cl.: A44C 5/00, A45F 5/00, H04B 1/38

(54) **MULTI-COMPONENT WRIST STRAP**
MEHRKOMPONENTENARMBAND
DRAGONNE À COMPOSANTS MULTIPLES

(30) Priority: 14.09.2005 GB 0518722
(43) Date of publication of application: 23.07.2008
(73) Proprietor: Good, Hervay, West Sussex RH10 4QA (GB)
(72) Inventor: Good, Hervay, West Sussex RH10 4QA (GB)
(74) Representative: Scott, Fiona Penelope Elaine
(86) International application number: PCT/GB2006/003420
(87) International publication number: WO 2007/031761

(56) References cited:
- EP-A- 0 461 547
- WO-A-01/11917
- CH-A5- 587 471
- DE-A1- 10 019 166
- GB-A- 2 399 253
- US-A- 2 811 294
- US-A1- 2004 198 470
- US-B1- 6 230 029

## Description

The present invention relates to a wrist strap comprising two or more strap portions to each of which one or more components such as a watch, a torch, an identity bracelet or a compass, for example, can be attached. The strap portions can be reversibly inter-engaged with each other, to allow the user to vary the components that can be worn on the wrist.

The use of wrist straps for accommodating components other than or in addition to basic wrist watch faces is known. US 5 511 702, US 5 303 421 and US 6 366 250 disclose wrist straps for accommodating a pager, the straps of the latter two patents including an antenna. US 5 636 755, discloses a pouch that can be attached to a watch strap to facilitate the storage of items such as coins, pills and other small objects. The pouch is essentially slid over the watch strap and carried on the side of the wrist in use. A similar device is disclosed in US 3 303 977 for attaching ancillary articles such as a compass or the like to a watch strap. In each case the device is mounted on the watch strap and positioned almost adjacent the watch face on the upper side of the wrist. Although this facilitates ease of access, the positioning of two items so close together on a limb of relatively small diameter inevitably leads to some discomfort experienced by the wearer.

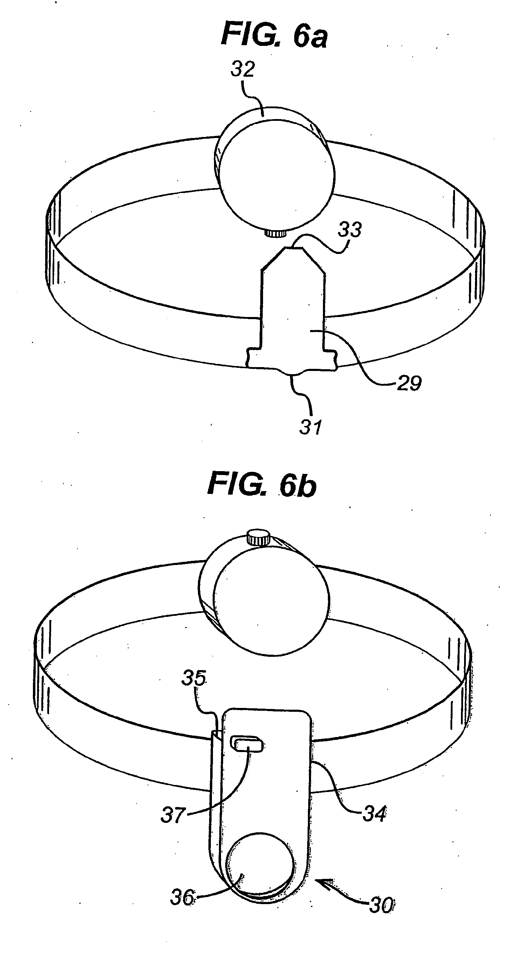

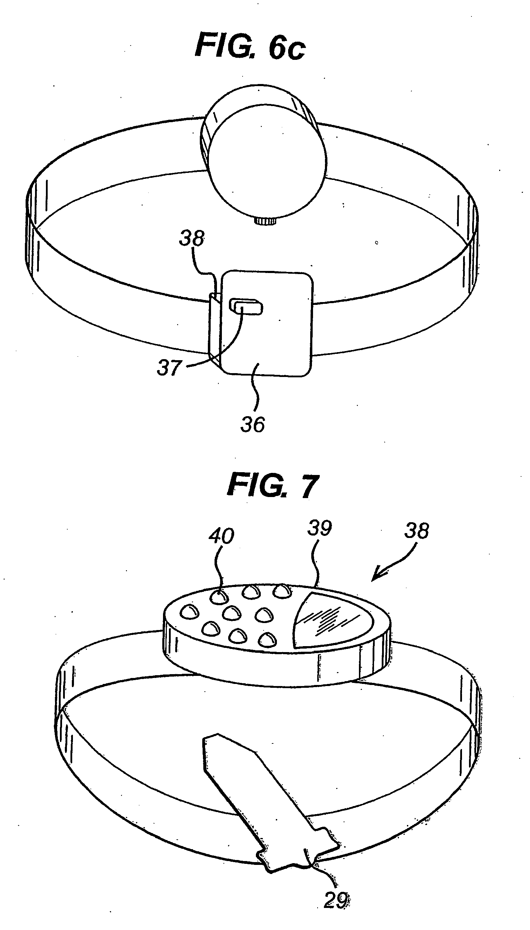

EP 0 602 828 A1 discloses a compact wrist telephone comprising a housing having a shape and configuration similar to that of a wrist watch. The housing comprises two portions hingedly connected to each other. The first hinged portion includes a receiver transducer and the second hinged portion includes a microphone transducer. When the housing is opened the distance between the receiver and microphone transducers facilitates the making and receiving of telephone calls. One problem with this arrangement is the difficulty of using the telephone when attached to the wrist and, as will be apparent from Figure 6, it is necessary to remove the device from the wrist for use.

US 5 499 292 and US 5 381 387 disclose a wrist watch telephone comprising a two layer strap. The two layer strap comprises an upper layer and a lower layer, the two layers being hingedly attached to each other. The microphone and receiver for making and receiving telephone calls is located in the upper layer of the strap. The microphone and receiver are connected to the watch face control unit which provides power to the entire apparatus. One disadvantage of this wrist worn device is the need to unhook the speaker from its cradle and rotate it into position before use. This constant movement inevitable leads to wear and damage, which is difficult to prevent or rectify.

US 6 215 985, US 2003/0019894A1 and JP 2002344590 A each disclose a wrist holder for a mobile phone. The wrist holder comprises a wide strap such as an elasticated strap which is placed on the forearm and configured for the receipt of a mobile phone of standard size. Such devices are uncomfortable and awkward to use due to the unnatural positioning of the users hand during the making or receiving of a telephone call.

US Design patent 249, 939 discloses a one-piece wrist strap for a watch and writing implements. The strap is inevitably very wide to enable writing implements to be carried therein.

US 5 257 729, US 5 904 280 and JP 2002234625 disclose wrist countable devices for holding one or more tools. US 5 904 280 and JP 2002234625 disclose magnetic plates for holding metal objects such as screws and nails. The magnetic plates are mounted on a strap which is positioned on the upper surface the wrist in use. The magnetic plate of US 5 904 280 further includes a torch, a tape measure housing and a tape measure. The problem with such devices is that they are extremely bulky and are uncomfortable to wear for more than a short time.

CH 587 471 discloses a wrist strap comprising a plurality of inter-engagable strap parts, each strap part bearing a single component. Components such as watch faces, calculator, solar batteries, stop-watches, microphones, thermometers and pagers can be included.

US 3 924 304 discloses a wrist watch having a box buckle. The box buckle may be constructed to facilitate the storage of small items such as pills or the like, a compass, an identity tag or a medi-tag. A problem with this arrangement is that the user cannot change the components present on the watch strap and is restricted to a watch as one component and a compass or pill box as the second component, for example.

There is, therefore, a need for a wrist strap capable of carrying two or more components in a comfortable arrangement compared to the wrist straps of the prior art. There is also a need for a wrist strap which will facilitate better ease of use of the components attached thereto and prolong the time for which the strap can be worn compared to the wrist straps of the prior art. There is also a need for a wrist strap that will allow the user to select and change the components worn with the strap rather than being restricted to a set of specific components, for example.

The present invention addresses those needs.

A first aspect of the invention provides a wrist strap for carrying two or more components, the strap comprising:
(i) a first strap part having a first and a second end and including a first component between said first and second ends; and
(ii) a second strap part having a first and a second end and including a second component between said first and second ends;
wherein the first ends of each of the first and second strap parts are reversibly engagable with each other and the second ends of the first and second strap parts are reversibly engagable with each other.

The first strap part is reversibly engagable with the second strap part through the use of any suitable complementary means provided on the end portions of the first and second strap parts. Suitable means include buckles, clips and interlocking components.

For example, the first strap part may be provided with buckles at one or both ends for inter-engagement with complementary holes provided at the end portion of the other strap part. Alternatively the first strap part may be provided with holes at one or both ends for reversible inter-engagement with buckle portions provided at one or both ends of the end of the second strap part.

Alternatively, the first strap portion may be provided at each end with clips or hooks which are reversibly inter-engagable with complementary clips or hooks provided at each end of the second strap portion.

The first and second components are preferably each positioned centrally between the first and second ends of their respective strap parts such that the first component rests essentially in a central position against the upper surface of the wrist and the second component rests essentially centrally against the lower surface of the wrist.

Although the presence of one component only on each of the strap parts is preferred, either or both of the first and second strap parts may include further components, the limitation on the number of components depending upon the size of the individual components and the ensuing comfort to the user. In the event that either or both of the first and second strap parts includes one additional component, this component is preferably located together with the component already present as centrally as possible between said first and second ends of the respective strap parts. If two or more additional components are to be added these should be distributed along the length of each strap part so that the individual components are located either essentially centrally on the top or essentially centrally at the side of the wrist to avoid the discomfort associated with the positioning of components at the region between the top and side of the wrist.

The first component may be selected from a watch, a pager, an identity tag, a security tag, a compass, a light unit or a memory access and status display unit of a mobile telephone or a computer for sub-aqua diving. Preferably the first component is selected from a watch or a memory access and status display unit of a mobile phone.

The second component may be selected from a watch, an identity tag, a security tag, a light unit or a pouch adapted to receive and hold a wireless headset of a mobile phone. Preferably the second component is a light unit or a pouch adapted to receive and hold a wireless headset of a mobile phone.

The first and second components may be formed integrally with the first and second strap portions respectively or may be formed separately therefrom and secured to each of the strap parts using any suitable means for inter-engagement, such as clips, pins etc.

In a first preferred embodiment of the first aspect of the invention there is provided a wrist strap for carrying two components, wherein the first component is a watch and the second component is a light unit. The first component may be selected from any type of commonly used watch, such as a digital watch or an analogue watch. The watch may be further characterised by the presence of features such as a stop-watch, an alarm or a GPS locater, for example.

The light unit comprising the second component comprises a light source and a housing having a substantially flat upper and lower surfaces and side walls joining said two surfaces. In use, the upper surface of the housing sits distally from the wrist. The lower surface of the housing sits adjacent the wrist in use. The edges of the upper and lower surfaces together with the side walls define the front, rear and side of the housing, which face towards and away from the hand and to either side of the wrist in use respectively.

The shape and configuration of the housing of the light unit preferably approximates to the shape of the display unit of a standard wrist watch, thereby allowing the second component to be comfortably worn against the lower surface of the wrist.

The light source may be selected from any one of a number of suitable light sources known to a person skilled in the art, but is preferably a in the form of a Light Emitting Diode (LED). LEDs are readily available, are cheap and can be readily fitted into a compact housing such as that described above.

The housing of the light unit includes a seat that is provided at or towards the front edge of the upper surface of the housing, at the junction between upper surface of the housing and the front wall or in the front wall in use. The seat is shaped and configured for receipt of the light source therein. It will therefore be appreciated that the provision of a light unit having a light source positioned at or towards the front edge of the housing or in the front wall allows the user access to a torch at all times, which will be particularly valuable at times of emergency. Once the light unit is switched on, the user has hands free access to a torch, which allows a number of tasks requiring good illumination to be performed without the creation of unwanted shadows that arise when remotely placed torches are used. Such tasks include unlocking doors, writing, inflating tyres manipulating apparatus underwater or the like. It can light a path ahead if the users hands are at their side, which is particularly useful if a number of bags are being carried. If the torch is switched on unintentionally, this will be immediately noticed and can be rectified by the user, thereby minimising the incidence of flat batteries.

The seat for the LED is located and the LED is preferably positioned therein such that the angle of the illuminating beam is of the order of 10 to 40°, preferably 18 to 28° and especially 23° relative to the flat surface of the housing.

The LED may be powered by any suitable power sources, but is preferably powered by a battery such as a lithium cell.

The housing is provided with a switch to enable the LED to be turned on and off. The switch may be in the form of a "push button" or a "sliding" switch.

It will be appreciated that the wrist strap of the first preferred embodiment of the first aspect if the invention can be used for users who are either right handed or left handed, simply by reversing the way in which the first strap piece is attached to the second strap piece.

In a second referred embodiment of the first aspect of the invention there is provided a wrist strap in which the first component is a watch as described previously and the second component is a wireless headset or pouch adapted to receive and hold the wireless headset of a mobile telephone. In a particularly preferred embodiment, the second component is a pouch for a wireless headset. The wireless headset may be any conventional headset, the operation and power requirements of which are known to a person skilled in the art. Particularly preferred headsets are those sold under the trademark of Bluetooth™ headsets. Preferably the headset is a wireless headset having a ear hook, which is shaped and configured to allow the headset to be carried within the ear for normal operation rather than be clipped over the ear as is currently the case. The headset with the retractable ear hook can be folded flat when not in use, which allows it to be easily and unobtrusively placed in the pouch of the wrist strap. This means that the headset is readily available for use and is not easily lost or stolen.

The retractable ear hook may be formed from a section of a resilient material having a first and a second end and an upper and a lower surface. The resilient material is attached to the headset via the first end and inner surface of the material section. The second end is shaped and configured in such a way to allow the hook to be readily positioned within the upper part of the user's ear to provide for the optimal positioning of the headset. Preferably the second end has a configuration off flattened Y. The second end of the ear hook may be burred or provided with a cushioning material for comfort. The resilient nature of the material of the hook means that it can be pushed flat against the headset for ease of storage within the pouch, but has sufficient strength and flexibility to allow the headset to be retained within the outer ear of a number of different users.

If the second component comprises a pouch into which the headset is placed, the pouch is configured such that the microphone can be readily accessed without removing the headset if necessary. The pouch may be in the form of a casing provided with a mouth, a seat and a hole. The casing is configured to receive the headset via the mouth so that the microphone is positioned within the hole. The headset engages the upper surface of the mouth and is retained in position by the retractable ear hook provided thereon. The ear hook is naturally biased away from the body of the headset and it is this natural biasing, which helps to retain the headset in place. Cushioning provided on the end of the ear hook also engages the seat within the pouch and retains the headset in position. Removal of the headset can be readily achieved by depressing the cushioning on the headset which compresses the body of the retractable ear hook against that of the headset and allows it to be slidably removed through the mouth of the pouch.

Alternatively the pouch may be in the form of a sleeve provided with a mouth and a seat. The sleeve extends from the speaker to just above the microphone of the headset which means that the microphone is essentially open. The microphone portion of the headset is readily slid into the mouth of the sleeve or pouch. The speaker portion of the headset engages the upper surface of the mouth of the sleeve or pouch, which restricts and partially retains the headset in position. Engagement of the cushioned portion of the retractable ear hook with the seat further restricts and retains the headset in position.

In a third preferred embodiment of the first aspect of the invention, the first component is selected from a status display unit of a mobile phone, a memory access unit of a mobile phone or a status display and memory access unit of a mobile phone. The second component is a wireless headset or a pouch for a wireless headset as described above. In a particularly preferred-embodiment, the second component is a pouch for a wireless headset, preferably a wireless headset having a retractable ear hook as described above. The display and or memory unit, together with the wireless headset can be used together with a remote transmitter to perform all of the functions currently performed by a conventional mobile phone. It will therefore be appreciated that this combination essentially provides a three part mobile phone. The status display and or memory unit can be provided with buttons or soft keys that can be used to access the memory of the phone and allow the user to make telephone calls without using the key pad provided on the main transmitter. The status display and/or memory unit can be linked to the main transmitter either independently or via the wireless headset, which allows communication there between, providing the transmitter is with a range of 10 meters of the wrist strap carrying these devices. The key pad of the main transmitter can be used to input new numbers or to write text messages. Alternatively if the status and display unit is provided with sufficient soft keys or buttons, the transmitter could be provided as a unit similar in size to that of a credit card, which can be carried in a purse or a wallet.

It will be appreciated that the wireless headset and/or the memory and status display unit of the second and third aspects of the invention are provided with transmitters and receivers to allow the headset, memory and display unit and main transmitter to communicate with each other over short distances.

A second aspect of the invention provides a kit for a mobile phone, the kit comprising a wrist strap comprising first and second strap parts, the first strap part including a memory access unit of a mobile phone and or a status display unit for a mobile phone; the second strap part including a pouch adapted to receive a wireless headset of a mobile phone and a wireless headset for a mobile phone. The wireless headset is preferably a modified headset, which includes a retractable ear hook, which allows the headset to comfortably sit within the outer ear of a person in use and be easily retained and stored within the pouch unit of the pouch of the second strap part.

The invention will now be described with reference to the accompanying figures and embodiments. Variations of these embodiments falling within the scope of the invention will be apparent to a person skilled in the art.
Figure 1 shows a wrist strap according to the first aspect of the invention.
Figure 2 shows a wrist strap according to the first aspect of the invention, where the second component is a light unit.
Figure 3 shows the light unit of figure 2.
Figure 4 shows a sliding switch used to operate the light unit of figures 2 and 3.
Figure 5 shows a wrist strap according to the invention, where the second component is a wireless headset.
Figure 6 shows a wrist strap according to the first aspect of the invention, where the second component is a pouch for a wireless headset.
Figure 7 shows a modified wireless headset for use with the wrist straps of figures 5 and 6.
Figure 8 shows a wrist strap according to the first aspect of the invention, where the first component is a memory unit and/or a status display unit of a mobile phone and the second component is a wireless headset or a pouch for a wireless headset.

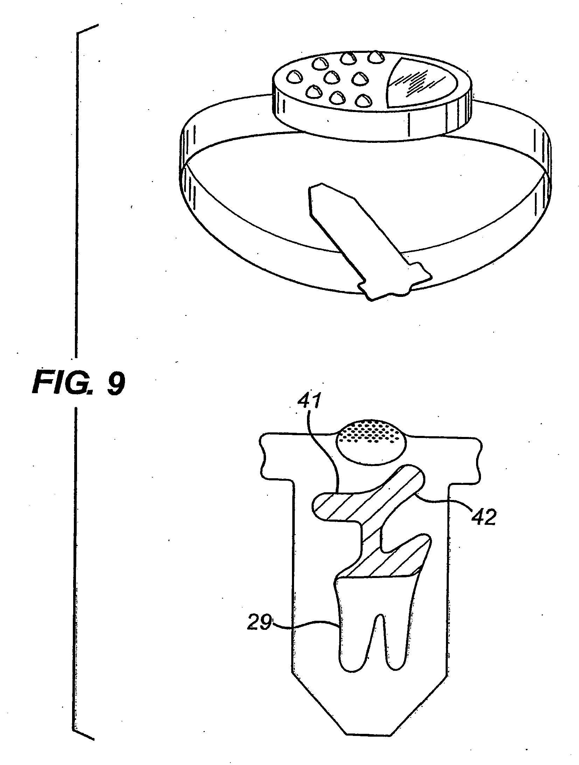

Figure 9 shows a kit for a mobile phone according to the second aspect of the invention.

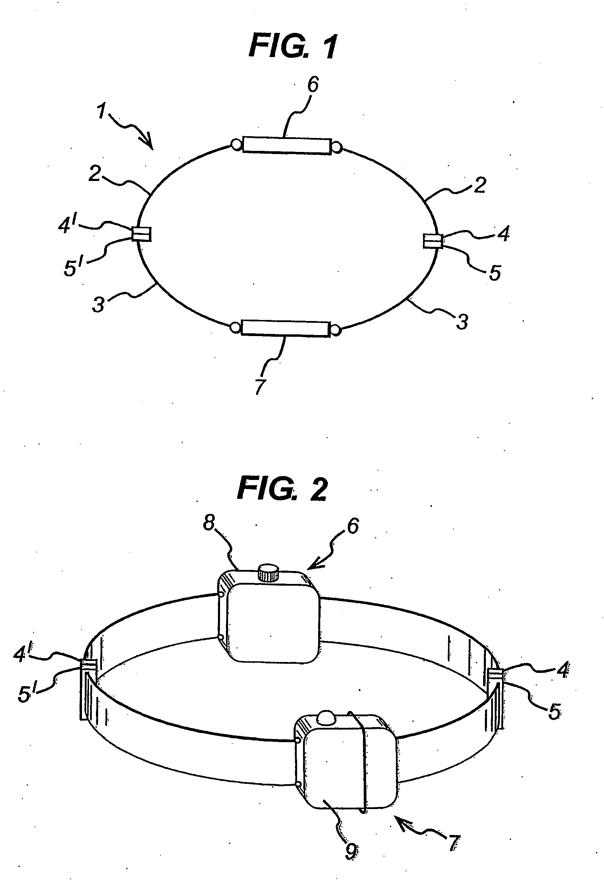

The wrist strap (1) of figure 1 comprises first (2) and second (3) strap parts. The first strap part (1) includes a clip or a buckle or the like (4, 4') for reversible inter-engagement with complementary clips or buckles (5, 5') provided on the second strap part (3). The first strap part is provided with a first component (6), selected from a watch, a pager, an identity tag, a security tag, a compass, a light unit, a memory unit for a mobile phone, a status display unit for a mobile phone, a memory and status display unit for a mobile phone a computer for sub-aqua diving or an item of decorative or sentimental value. The second strap part is provided with a second component (7) selected from a watch, a pager, an identity tag, a security tag, a compass, a light unit, a memory unit for a mobile phone, a status display unit for a mobile phone, a memory and status display unit for a mobile phone, a pouch for a wireless headset for a mobile phone, a wireless headset for a mobile phone or an item of decorative or sentimental value. In a preferred embodiment illustrated in figure 2, the first component (6) is a watch (8) and the second component (7) is a light unit (9). The strap parts (2) and (3) have a width and thickness, which corresponds to that of a strap of a normal wrist watch. It will therefore be appreciated that the wrist strap of the present invention is comfortable in use and does not restrict movement of the wrist or lower arm.

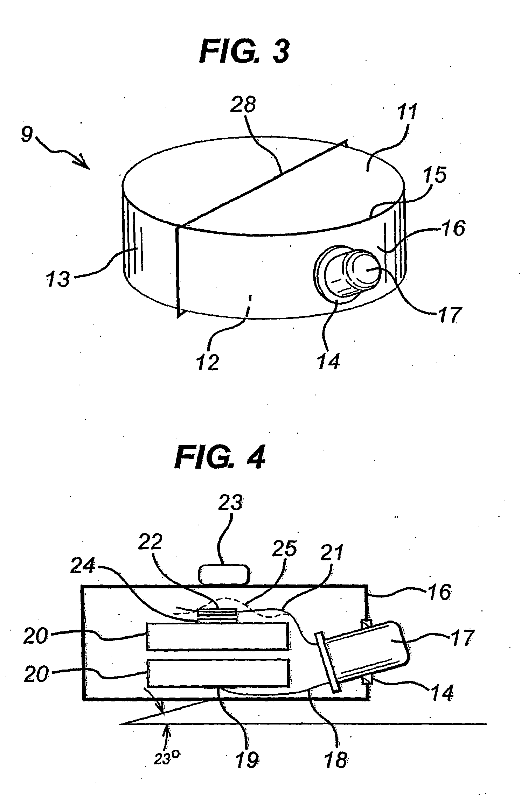

The light unit (9) (figure 3) comprises a housing having the shape and configuration of a regular watch case. The housing is provided with an upper surface (11) and a lower surface (12). The upper and lower surfaces are joined together via side walls (13). In use the lower surface (12) sits adjacent the wrist. The housing is further provided with a seat (14), which is positioned at or towards the front edge (15) of the upper surface (11) or in the front wall (16) of the housing or at the junction between the front edge (15) and the front wall (16). A light source (17) is located within the seat (14). The light source may be selected from any one of a number of suitable light sources. Typical light sources include bulbs and light emitting diodes. However the light source is preferably a light emitting diode (LED). The LED is positioned within the seat (14) such that the angle of illumination provided by the light source in use is of the order of 23° relative to the flat surface of the housing. Any suitable types of LED can be used for the light unit (9). Preferred LEDs include the 3mm and 5mm Nichia white LED having a 60° beam and a power rating of 30mAh⁻¹ (4V).

The LED of figure 3 is most preferably powered by one or more lithium cells. Two CR2025 (3V, 160mAh⁻¹) or CR2430 lithium cells are typically used. From Figure 4, it can be seen that the LED light source (17) is located within a seat at the junction between the front edge of the upper surface (15) and the front edge (16). The first lead of the LED (18) is pressed against the first terminus (19) of the lithium cell (20). The second lead of the LED (21) has a contact point (22). When the switch (23) is depressed the contact point (22) is forced into contact with the second terminus (24) of the lithium cell (20) thereby completing the electrical circuit and switching the LED on. The second lead (21) is passed through holes in a contact support insulator (25), which biases the contact point (22) away from the second terminus (24) of the lithium cell and prevents the LED from being switched on by accident. The LED can therefore only be switched on via the operation of the switch. The contact support insulator is formed of a resilient material, which is able to flex enough to allow the contact point (22) to make contact with the second terminus of the lithium cell without itself being deformed.

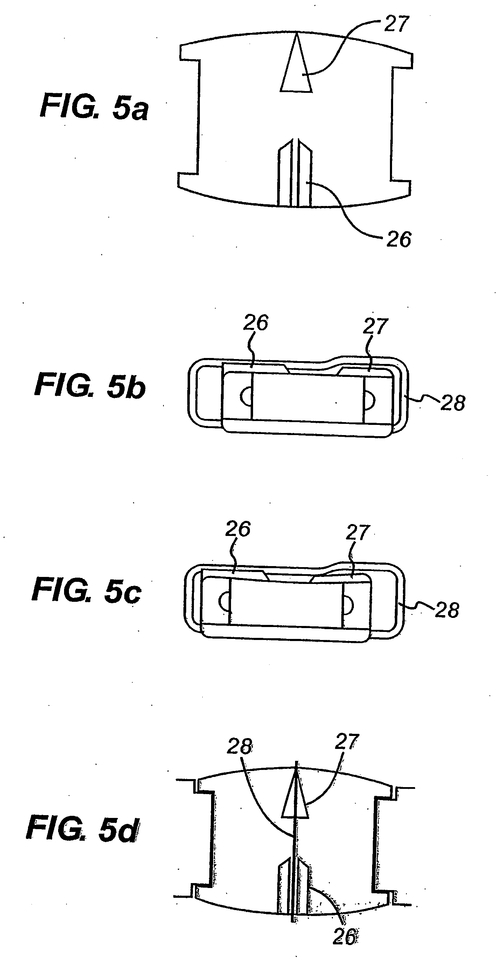

Figures 5a, 5b, 5c and 5d illustrate a sliding switch arrangement for operating a LED of figures 2 to 4. The upper case of the torch unit (Figure 5a) is provided with two raised portions (26) and (27). Raised portion (26) is provided on one side of the upper surface of the housing and is formed in two parts, which define a channel extending towards the opposite side of the upper surface upon which is provided the second raised portion (27). The second raised portion (27) is positioned above the second contact point (22). Depression of raised portion (27) pushes contact point (22) against the second terminus (24) of the lithium cell (20) and switches the LED on. Alternatively, a slide (28) located within channel (26); extending around the outside of the torch unit and over raised portion (27) can be used to turn the LED off or on. The slide is essentially of a rectangular configuration. The short side of the slide, which sits adjacent the raised portion (27) in use is slightly longer than the other short side and the end of the long side adjacent the elongated short side, which sits over raised portion (27) in use is slightly raised along its length to allow the slide to fit over portion (27). When the slide is in its first (off) position (figure 5b) the enlarged part of the slide sits over the raised portion (27) and exerts no pressure on the underlying contact point (22). However, when the slide is moved into its second (on) position the narrow part of the slide pushes down on the raised portion (27) and causes contact point (22) to move into engagement with the second terminus (24) of the lithium cell. Figure 5d shows the upper case of the torch unit with raised portions (26) and (27) and slide member (28).

In figure 6, the torch or light unit has been replaced with a wireless headset (29) for a mobile telephone. The headset is powered by any suitable battery known to a person skilled in the art. It may be fixedly connected to the second component (figure 6a) or may be placed in a pouch (30) (figure 6b). In the embodiment illustrated in figures 6a and 6b, the electronics were provided by a Windigo headset. The speaker (31) of the headset is positioned adjacent the front of the watch (32), whilst the microphone (33) is positioned at the other end facing away from the hand. If the second component comprises a pouch (30) into which the headset (29) is placed, the pouch is configured such that the microphone can be readily accessed without removing the headset (29) if necessary. The pouch may be in the form of a casing (34) provided with a seat (35) and a hole (36). The casing (34) is configured to receive the headset (29) so that the microphone is positioned within the hole. The headset (29) is retained in position by the retractable ear hook provided thereon. The ear hook is naturally biased away from the body of the headset (29) and it is this natural biasing, which helps to retain the headset (29) in place. Cushioning provided on the end of the ear hook also engages a seat (35) within the pouch (30) and retains the headset in position. Removal of the headset can be readily achieved by depressing the cushioning on the headset (20), which compresses the body of the retractable ear hook against that of the headset.

Alternatively (figure 6c) the pouch may be in the form of a sleeve (36) provided with a seat (37). The sleeve extends from the speaker to just above the microphone of the headset (29), which means that the microphone is essentially open. The microphone portion of the headset is readily slid into the mouth of the sleeve or pouch. The speaker portion of the headset (29) engages the upper surface (38) of the mouth of the sleeve or pouch, which restricts and partially retains the headset in position. Engagement of the cushioned portion of the retractable ear hook with the seat (37) further restricts and retains the headset (29) in position.

It will be appreciated that the headset (29) can be used either as part of the second component or independently. When the headset forms part of the second component the speaker is sloped so that there is no need to hold it over the ear, which makes it easier to use from the wrist. To answer or make a call, one merely needs to press a button at the end of the earpiece, which can be accomplished with the headset either in or out of the pouch or sleeve. When removed from the pouch or sleeve, the retractable ear hook is automatically deployed and can be placed in the ear using only the forefinger. When returning the ear hook to the pouch or sleeve, the ear hook automatically retracts beneath its cover, which stops it from getting caught on clothing. The headset may be provided with a volume control. Lights may also be provided so that the operational status of the unit can be monitored, including whether or not the batteries are charging. Recharging the headset can be achieved by placing the unit on a stand connected to a charger. As long as the headset (29) is within 10m of the main transmitter unit, calls can be readily made and answered from the wrist.

In Figure 7 the first component is a mobile phone memory and/or display unit (38). This can be powered by any suitable power until known to a person skilled in the art. The second component is the headset (29) as described above. These first and second components can be used together with a main transmitter unit (39) as a three part mobile phone. The main transmitter unit (39) may be provided with a key pad (40) so that new numbers can be entered into the memory and calls can be made there from. With the display and communications part of the phone worn on the wrist, the main transmitter may be configured to fit within a purse or a wallet, providing the illusion that a phone is not being carried.

Alternatively, the main transmitter may simply be used to power the operation of the memory and/or status display unit and the headset, in which case the memory and/or status display unit is provided with a keypad comprising hard or soft keys.

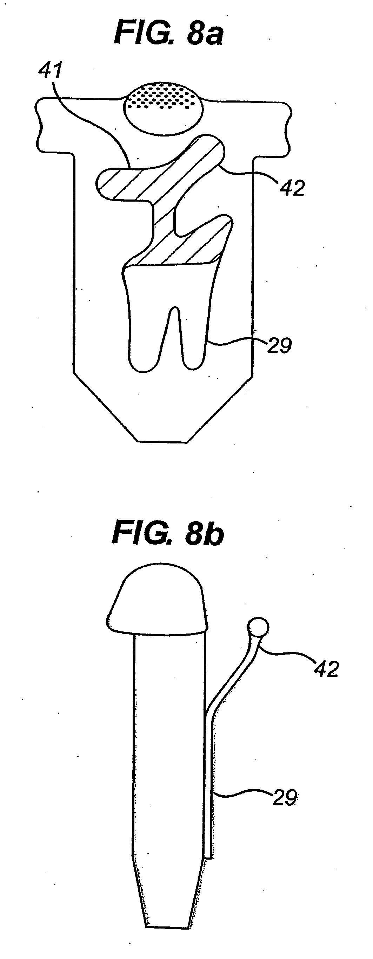

The retractable ear hook of headset (29) is illustrated in figures 8a and 8b. The ear hook is formed from a section of resilient material which is attached along part of its length to the body of the wireless headset. The other end of the ear hook is able to undergo limited pivotal movement relative to the part of the hook attached to the body of the wireless headset and is formed of a flattened Y cross-section to allow it to be positioned within the ear. The slightly flattened arms of the Y sit within the upper portion of the outer ear and retain the headset in position. Unlike the "over ear" hooks associated with the conventional headsets, the headset with the retractable earpiece allows the user to wear glasses whilst it's being used. The natural resilience of the material of the ear hook means that it can be folded flat against the headset beneath a cover when not required. The ear hook is preferably provided with cushioning (42) over the region of the flattened Y cross-section (41) to ensure comfort to the user.

## Claims

1. A wrist strap (1) for carrying two or more components, the strap comprising:
(i) a first strap part (2) having a first and a second end and including a first component (6) between said first and second ends; and
(ii) a second strap (3) part having a first and a second end the first ends of each of the first and second strap parts are reversibly engagable with each other and the second ends of the first and second strap parts are reversibly engagable with each other wherein the second strap part includes a light unit (9) adapted to be worn against the lower surface of the wrist, the light unit comprising a housing having a front surface facing towards the hand in use and a light source received within a seat positioned at or towards the front (15, 16) of the housing thereby to provide the wearer with access to a hands free torch.

2. A wrist strap according to claim 1, wherein the first component (6) and the light unit (9) are positioned centrally between the two ends of the first and second strap parts respectively.

3. A wrist strap according to claim 1 or claim 2, where the first component (6) is selected from the group comprising a watch, a pager, an identity tag, a security tag, a compass, a pouch adapted to receive and hold a wireless headset of a mobile phone, a mobile phone memory unit, a computer for sub-aqua diving, a mobile phone status display unit and a mobile phone memory and status display unit.

4. A wrist strap according to any one of claims 1 to 3, wherein the first component (6) is a watch and the second component is a light unit.

5. A wrist strap according to any one of the preceding claims, wherein the light unit (9) comprises a light source (17) and a housing having a substantially flat upper (11) and lower (12) surfaces and side walls (13) joining said two surfaces, the upper surface of the housing sitting distally from the lower surface of the wrist in use.

6. A wrist strap according to claim 5, wherein the edges of the upper and lower surfaces together with the side walls define the front (15, 16), rear and side edges and walls of the housing, which face towards and away from the hand and to either side of the wrist respectively in use.

7. A wrist strap according to any one of claims 4 to 6, wherein the light source is an LED light source.

8. A wrist strap according to any one of the preceding claims, wherein a seat (14) is provided at or towards the front edge (15) of the upper surface of the housing, in the front wall (16) of the housing or at the junction between the front edge (15) of the housing and the front wall (16) of the housing, the seat (14) being adapted to receive and retain a light source (17) in place.

9. A wrist strap according to any one of claims 4 to 8, wherein the seat (14) and light source (17) are positioned to provide an illuminating beam having an angle of 10 to 40° relative to the flat surface of either the upper or lower flat surface of the housing.

10. A wrist strap according to claim 9, wherein the angle of illumination is 18 to 28°.

11. A wrist strap according to claim 9 or 10, wherein the angle of illumination is 23°.

12. A wrist strap according to any one of claims 4 to 11, wherein the light source is selected from a Nichia 3mm LED or a Nichia 5mm LED or a light bulb.

13. A wrist strap according to any one of claims 4 to 12, wherein the light unit comprises a power source for connection to the leads of the LED device.

14. A wrist strap according to any one of claims 4 to 13, wherein the power source is selected from GR2025 and GR2430 lithium cells, nickel cadmium cells and Hen cells.

15. A wrist strap according to any one of the preceding claims, wherein the first component (6) and light unit (9) are formed integrally with the first (2) and second (3) strap portions or are formed separately and are secured to each of the strap parts using inter-engagement means.

16. A wrist strap according to any one of the preceding claims, wherein the light unit has a shape and configuration of a standard wrist watch.

## Patentansprüche

1. Armband (1) zum Tragen von zwei oder mehr Komponenten, wobei das Band aufweist:
(i) ein erstes Bandteil (2) mit einem ersten Ende und einem zweiten Ende und einschließlich einer ersten Komponente (6) zwischen dem ersten Ende und dem zweiten Ende, und
(ii) ein zweites Bandteil (3) mit einem ersten Ende und einem zweiten Ende, wobei die ersten Enden von dem ersten Bandteil und von dem zweiten Bandteil jeweils reversibel miteinander in Eingriff gebracht werden können und wobei die zweiten Enden von dem ersten Bandteil und von dem zweiten Bandteil jeweils reversibel miteinander in Eingriff gebracht werden können, wobei das zweite Bandteil eine Lichteinheit (9) umfasst, die zum Tragen gegen die untere Oberfläche des Handgelenkes angepasst ist, wobei die Lichteinheit ein Gehäuse mit einer Stirnfläche, die während der Benutzung der Hand zugewandt ist, und eine Lichtquelle umfasst, die innerhalb einer Aufnahme aufgenommen ist, die bei der oder in Richtung auf die Vorderseite (15, 16) des Gehäuses angeordnet ist, um **dadurch** dem Träger einem Zugriff auf eine freihändige Taschenlampe zu ermöglichen.

2. Armband nach Anspruch 1, wobei die erste Komponente (6) und die Lichteinheit (9) jeweils zentral zwischen den zwei Enden des ersten Bandteils und des zweiten Bandteils angeordnet sind.

3. Armband nach Anspruch 1 oder 2, wobei die erste Komponente (6) aus der Gruppe ausgewählt wird, die umfasst: eine Armbanduhr, einen Personenrufempfänger, eine Erkennungsmarke, eine Sicherheitsmarke, einen Kompass, eine zum Aufnehmen und zum Halten eines drahtlosen Kopfhörers für ein Funktelefon angepasste Tasche, eine Speichereinheit für ein Funktelefon, einen Computer für Unterwassertauchen, eine Anzeigeeinheit für den Status eines Funktelefons und eine Anzeigeeinheit für den Speicher und den Status eines Funktelefons.

4. Armband nach einem der Ansprüche 1 bis 3, bei dem die erste Komponente (6) eine Armbanduhr und die zweite Komponente eine Lichteinheit ist.

5. Armband nach einem der vorhergehenden Ansprüche, bei dem die Lichteinheit (9) eine Lichtquelle (17) und eine Gehäuse umfasst, das im Wesentlichen flache obere (11) und untere (12) Oberflächen und Seitenwände (13) aufweist, die die beiden Oberflächen verbinden, wobei während der Benutzung die obere Oberfläche distal von der unteren Oberfläche angeordnet ist.

6. Armband nach Anspruch 5, bei dem die Kanten der oberen und der unteren Oberfläche zusammen mit den Seitenwänden die Vorderseite (15, 16), die Rückseite und die Seitenkanten und die Wände des Gehäuses bestimmen, die während der Benutzung in Richtung auf die bzw. von der Hand und auf eine der beiden Seiten des Handgelenks angeordnet sind.

7. Armband nach einem der Ansprüche 4 bis 6, bei dem die Lichtquelle eine LED-Lichtquelle umfasst.

8. Armband nach einem der vorhergehenden Ansprüche, bei dem eine Aufnahme (14) an der oder in Richtung auf die Vorderkante (15) der oberen Oberfläche des Gehäuses, in der Vorderwand (16) des Gehäuses oder an der Verbindung zwischen der Vorderkante (15) des Gehäuses und der Vorderwand (16) des Gehäuses vorgesehen ist, wobei die Aufnahme (14) angepasst ist, eine Lichtquelle (17) in Stellung zu empfangen und zu halten.

9. Armband nach einem der Ansprüche 4 bis 8, bei dem die Aufnahme (14) und die Lichtquelle (17) angeordnet sind, um einen Beleuchtungsstrahl bereit zu stellen, der einen Winkel von 10° bis 40° in Bezug zu der flachen Oberfläche von entweder der oberen oder der unteren Oberfläche des Gehäuses aufweist.

10. Armband nach Anspruch 9, bei dem der Beleuchtungswinkel in dem Bereich von 18° bis 28° liegt.

11. Armband nach Anspruch 9 oder 10, bei dem der Beleuchtungswinkel 23° beträgt.

12. Armband nach einem der Ansprüche 4 bis 11, bei dem die Lichtquelle aus einer Nichia 3 mm LED oder einer Nichia 5 mm LED oder einer Glühlampe ausgewählt wird.

13. Armband nach einem der Ansprüche 4 bis 12, bei dem die Lichteinheit eine Stromquelle zur Verbindung an die Anschlüsse der LED-Vorrichtung aufweist.

14. Armband nach einem der Ansprüche 4 bis 13, bei dem die Stromquelle aus CR2025 und CR2430 Lithiumzellen, Nickel-Cadmium-Zellen und Hen-Zellen ausgewählt wird.

15. Armband nach einem der vorhergehenden Ansprüche, bei dem die erste Komponente (6) und die Lichteinheit (9) mit dem ersten Bandteil (2) und dem zweiten Bandteil (3) einstückig ausgebildet sind oder bei dem sie einzeln ausgebildet und miteinander jeweils über Eingriffsmittel gesichert sind.

16. Armband nach einem der vorhergehenden Ansprüche, bei dem die Lichteinheit die Gestalt und die Konfiguration einer Standardtaschenlampe aufweist.

## Revendications

1. Bracelet (1) pour supporter au moins deux composants, le bracelet comprenant :
(i) une première partie de bande (2) ayant une première extrémité et une deuxième extrémité et comprenant un premier composant (6) entre lesdites première et deuxième extrémités ; et
(ii) une deuxième partie de bande (3) ayant une première extrémité et une deuxième extrémité, les premières extrémités des première et deuxième parties de bande sont engageables de manière réversible l'une avec l'autre et les deuxièmes extrémités des première et deuxième parties de bande sont engageables de manière réversible l'une avec l'autre, dans lequel la deuxième partie de bande comprend une unité d'éclairage (9) adaptée pour être portée sur la surface inférieure du poignet, l'unité d'éclairage comprenant un boîtier ayant une surface frontale orientée vers la main durant l'utilisation et une source de lumière logée à l'intérieur d'un siège positionné au niveau ou vers l'avant (15, 16) du boîtier pour fournir ainsi au porteur un accès à une torche mains-libres.

2. Bracelet selon la revendication 1, dans lequel le premier composant (6) et l'unité d'éclairage (9) sont positionnés centralement entre les deux extrémités des première et deuxième parties de bande, respectivement.

3. Bracelet selon la revendication 1 ou 2, dans lequel le premier composant (6) est sélectionné dans le groupe comprenant une montre, un téléavertisseur, une étiquette d'identification, une étiquette de sécurité, une boussole, une poche adaptée pour recevoir et maintenir un écouteur sans fil d'un téléphone mobile, une unité de mémoire de téléphone mobile, un ordinateur pour la plongée sous-marine, une unité d'affichage d'état de téléphone mobile et une unité d'affichage d'état et de mémoire de téléphone mobile.

4. Bracelet selon l'une quelconque des revendications 1 à 3, dans lequel le premier composant (6) est une montre et le deuxième composant est une unité d'éclairage.

5. Bracelet selon l'une quelconque des revendications précédentes, dans lequel l'unité d'éclairage (9) comprend une source lumineuse (17) et un boîtier ayant des surfaces supérieure (11) et inférieure (12) sensiblement plates et des parois latérales (23) unissant les deux surfaces, la surface supérieure du boîtier se trouvant distante de la surface inférieure du poignet durant l'utilisation.

6. Bracelet selon la revendication 5, dans lequel les bords des surfaces supérieure et inférieure conjointement aux parois latérales définissent les bords avant (15, 16), arrière et latéraux et les parois du boîtier qui sont face à et éloignées de la main et de chaque côté du poignet durant l'utilisation.

7. Bracelet selon l'une quelconque des revendications 4 à 6, dans lequel la source lumineuse est une source lumineuse à DEL.

8. Bracelet selon l'une quelconque des revendications précédentes, dans lequel un siège (14) est prédisposé au niveau ou vers le bord avant (15) de la surface supérieure du boîtier, dans la paroi avant (16) du boîtier ou à la jonction entre le bord avant (15) du boîtier et la paroi avant (16) du boîtier, le siège (14) étant adapté pour recevoir et maintenir en place une source lumineuse (17).

9. Bracelet selon l'une quelconque des revendications 4 à 8, dans lequel le siège (14) et la source lumineuse (17) sont positionnés pour fournir un faisceau d'éclairage ayant un angle de 10 à 40° par rapport à la surface plane de l'une ou l'autre des surfaces planes supérieure et inférieure du boîtier.

10. Bracelet selon la revendication 9, dans lequel l'angle d'éclairage est de 18 à 28°.

11. Bracelet selon la revendication 9 ou 10, dans lequel l'angle d'éclairage est de 23°.

12. Bracelet selon l'une quelconque des revendications 4 à 11, dans lequel la source lumineuse est sélectionnée parmi une DEL Nichia de 3 mm, DEL Nichia de 5 mm ou une ampoule d'éclairage.

13. Bracelet selon l'une quelconque des revendications 4 à 12, dans lequel l'unité d'éclairage comprend une source d'énergie pour la connexion aux conducteurs du dispositif à DEL.

14. Bracelet selon l'une quelconque des revendications 4 à 13, dans lequel la source d'énergie est sélectionnée parmi des piles lithium CR2025 et CR2430, des piles cadmium-nickel et des piles Hen.

15. Bracelet selon l'une quelconque des revendications précédentes, dans lequel le premier composant (6) et l'unité d'éclairage (9) sont formés d'une seule pièce avec les première (2) et deuxième (3) parties de bande ou sont formées séparément et sont fixés à chacune des bandes en utilisant des moyens d'engagement réciproque.

16. Bracelet selon l'une quelconque des revendications précédentes, dans lequel l'unité d'éclairage a une forme et une configuration d'une montre standard de poignet.
